# EUROPEAN PATENT SPECIFICATION

(11) **EP 0 486 441 B1**
(45) Date of publication and mention of the grant of the patent: **03.01.1996**
(21) Application number: 91830493.2
(22) Date of filing: 12.11.1991
(51) Int. Cl.: B60G 17/01

(54) **A suspension system for vehicles with hydraulic shock absorbers which are made interdependent to counteract rolling or pitching**
Fahrzeugaufhängungssystem mit hydraulischen Stossdämpfern die voneinander abhängig sind, um Nick- oder Rollbewegungen zu entgegenwirken
Système de suspension pour véhicules à amortisseurs de chocs hydrauliques qui sont conjugés pour compenser des mouvements de tangage ou de roulis

(30) Priority: 15.11.1990 IT 6789190
(43) Date of publication of application: 20.05.1992
(73) Proprietor: IVECO FIAT S.p.A., I-10156 Torino (IT)
(72) Inventor: Dal Col, Vittorio, I-10099 San Mauro Torinese (Torino) (IT)
(74) Representative: Marchitelli, Mauro

(56) References cited:
- EP-A- 0 229 310
- DE-A- 2 555 565
- DE-A- 3 500 601
- DE-A- 3 542 353
- DE-A- 3 710 996
- FR-A- 2 301 737
- PATENT ABSTRACTS OF JAPAN, vol. 7, no. 217 (M-245)(1362) 27 June 1983 & JP-A-58 112 821 (TOYOTA JIDOSHA KOGYO) 5 July 1983

## Description

The present invention relates to a suspension system for vehicles in which two similar, interdependent hydraulic shock absorbers interconnect respective remote regions of the suspended part of the vehicle and respective non-suspended parts, in which each shock absorber is of the type including a cylinder divided internally into an upper chamber and a lower chamber by a valved piston with a rod which projects from an upper end of the shock absorber, and a compensation chamber which communicates with the lower chamber by means of a valve assembly including a switching servo valve, and in which the two shock absorbers are interconnected by mutual enslavement means such that, when a predetermined pressure threshold is exceeded in one of the shock absorbers, the servo valve of the other shock absorber switches from a state in which the flow of liquid between the lower chamber and the compensation chamber through the valve assembly is less restricted and a state in which the flow is more restricted.

A suspension of this type is known from the document EP-A-0,229,310.

In this known system, the switching servo valves are hydraulically operated. The mutual enslavement means comprise hydraulic pipes each of which puts the upper chamber of one of the shock absorbers into communication with an operating chamber of the switching valve of the other shock absorber so that the valve is closed by the pressure in the said upper chamber.

One of the purposes of the known suspension system is to limit roll in heavy vehicles with high centres of gravity, such as buses and large vans. In this case, the interdependent shock absorbers are associated with wheels at opposite ends of the same axle. This known suspension is also usable to counteract pitching in road vehicles, in which case the interdependent shock absorbers are associated with front and rear wheels on the same side of the vehicle. Yet another application of the known suspension is to the bogies of railway carriages. In this case, the interdependent shock absorbers are interposed between the suspended part and the non-suspended part of each bogie on both sides thereof.

In the applications mentioned above, rolling or pitching is counteracted by the switching of the servo valves so as to increase the damping effect of one of the shock absorbers during its compression, when the pressure in the upper chamber of the other shock absorber of the pair increases beyond a predetermined threshold during its extension.

In practice, in the suspension system known from the document EP-A-0,229,310, the two shock absorbers are also interconnected by a third pipe which connects their compensation chambers in order to prevent the transfer of oil between the shock absorbers as a result of faulty sealing of the devices which operate the servo valves, which would cause one shock absorber to be emptied, with a loss of efficiency, and the other to be completely filledk , with a danger of breakage.

However, the known suspension system has the following drawbacks.
- Oil may be lost from the connectors or from one of the connecting pipes, putting both the interconnected shock absorbers out of action with serious consequences as regards travel safety.
- The connecting pipes, which are at least partly flexible, and the connectors are quite expensive.
- Telescopic shock absorbers are generally used in the known suspension system of the type in question. These shock absorbers normally have external dust-excluding boots or caps which extend over their upper parts. With this configuration, it is not possible to connect a pipe to the upper chamber by means of a connector located on the upper part of the shock absorber. The upper chamber is connected instead to a union on the lower part of the shock absorber by an annular space defined externally by an additional intermediate tube between the tube which constitutes the cylinder and the tube which defines the outside of the compensation chamber. This also means that each shock absorber is more expensive than a normal telescopic shock absorber.
- The known suspension system under consideration is also heavier than a conventional suspension system because of the connecting pipes, their connectors and the third tube, if any, within each shock absorber.
- Finally, this suspension system is not very easy to install because of the presence of the pipes and the need to fill the whole system with oil once it has been installed and to bleed air from the system when it has been filled.

DE-A-3 500 601 and JP-A-58-112820 show motor vehicle suspension systems provided with hydraulically or pneumatically controlled switching valves.

The object of the present invention is to provide a suspension system for vehicles with hydraulic shock absorbers which are made interdependent in order to reduce rolling oscillations and which may also be used to reduce pitching oscillations, and which can perform the functions of the suspension system of the document EP-A-0,299,310 without having any of the disadvantages listed above, that is, which is safer, more reliable, less expensive, lighter, less bulky and easier to install.

According to the present invention, this object is achieved by means of a suspension system having the features set forth in the characterising portion of appended Claim 1.

The invention has been developed for application to a right-hand and left-hand pair of shock absorbers of a vehicle but can also be fitted to a front and rear pair of shock absorbers on the same side of a vehicle to counteract pitching. Moreover, it can also be applied to the suspension of a driver's cab on the chassis of a vehicle to counteract pitching.

This concept affords a safer solution since each shock absorber is sealed and the only connection between the two shock absorbers is constituted by electrical wiring. In the event of the breakage of an electrical connection, the shock absorbers remain functional since they are prevented only from switching between one state and the other. The serious danger which would be involved if a vehicle were to travel with its shock absorbers out of action is thus avoided.

Preferably, each transducer is a normally-open pressure switch whose closure causes the excitation of a control winding of the respective solenoid valve so that it switches from the state in which the flow is less restricted to the state in which the flow is more restricted.

The increase in weight of a suspension system according to the invention in comparison with a conventional suspension system is negligible since the weight of the electrical wiring is negligible and lightweight electrical components (contacts, electromagnets, etc.) can be used.

The shock absorbers are preferably conventional telescopic shock absorbers and, for a given performance, weigh less than telescopic shock absorbers with third, intermediate tubes for transferring pressure from the upper chamber to the lower part of the shock absorber. In fact, the positioning of the pressure transducer is not affected by the presence of the dust-cap or boot.

In this connection, the pressure transducer is preferably located in the upper end of the piston rod and, in this case, the rod has an axial duct for transmitting the pressure from the upper chamber to the transducer.

The wire for each transducer can thus extend from the top of the shock absorber, that is, above the dust-cap or boot.

A suspension system according to the invention does not have the problems of bulk of a suspension system according to the prior art since the space occupied by the wires is negligible compared to that occupied by pipes.

Finally, as regards ease of installation, the arrangement of electrical wires in a vehicle clearly does not give rise to the problems posed by the installation of pipes. Moreover, once the electrical connections have been made, there is no need for bleeding since the shock absorbers have been sealed from the outset.

The subject of the invention and its further advantages will be understood better from a reading of the detailed description which follows, with reference to the appended drawings which show a preferred embodiment and a variant by way of non-limiting example.

### In the drawings:

Figure 1 is a shortened longitudinal section of one of the shock absorbers of the suspension system,
Figure 2 is a corresponding section showing only the lower part of the shock absorber with the switching valve in the state which corresponds to the less restricted flow, on an enlarged scale,
Figure 3 is a view from above taken on the arrow III of Figure 2, showing only the body of the switching valve,
Figure 4 is a partial section corresponding to part of Figure 2 but in which the solenoid valve is in the state corresponding to the more restricted flow, and
Figure 5 is an electrical diagram in which the two interdependent shock absorbers of the suspension system are shown schematically, together with their solenoid valves; Figure 5 also shows a variant applicable to an antipitching suspension system.

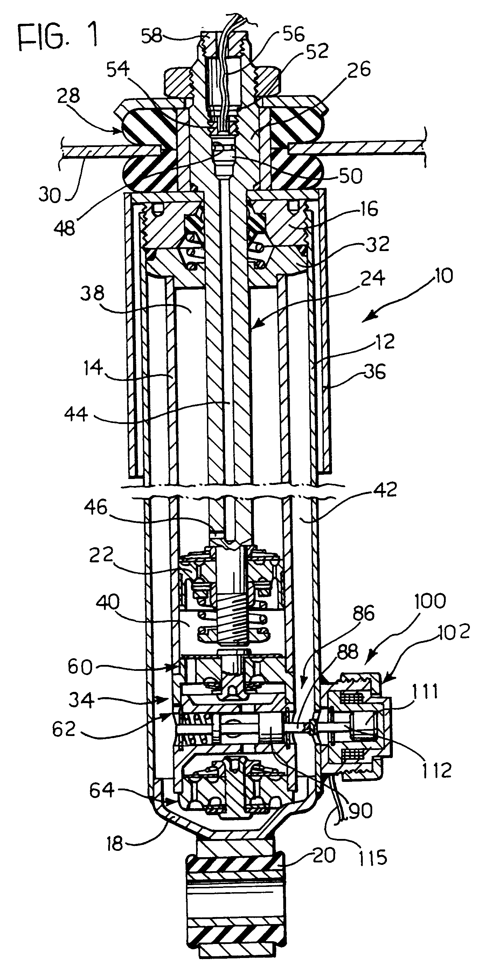

With reference to Figure 1, a telescopic shock absorber 10 forms part of a suspension system according to the invention and includes, in the usual manner, a body or outer tube 12 and an inner tube 14 coaxial therewith. The inner tube 14 constitutes the cylinder of the shock absorber.

The ends of the outer tube 12 are closed by an upper, annular end piece 16 and a lower, cap-shaped end piece 18.

The lower end piece 18 has a fixing bush 20 for connection to the non-suspended part of the vehicle adjacent a wheel.

A valved piston 22 of known type, the details of which will not be described, is slidable in the inner tube or cylinder 14. A rod 24 fixed to the piston 22 extends sealingly through the upper end piece 16 and has an enlarged, threaded fixing head 26 outside the end piece 16.

A resilient mounting 28 is fixed to the head 26 for connection to the body of the vehicle, part of which is shown at 30. An annular head piece 32, through which the rod 24 extends, is associated with the upper end piece 16 and closes the top of the cylinder 14.

A valve assembly, generally indicated 34, the details of which will be described below, is interposed between the lower end piece 18 and the lower end of the cylinder 14.

The shock absorber is completed by a dust-cap or boot 36 which is fixed to the head 26 of the rod 24 together with the mounting 28.

The valved piston 22 divides the interior of the cylinder 14 into an upper chamber 38 and a lower chamber 40.

An annular space 42 is defined between the outer tube 12 and the inner tube or cylinder 14 and constitutes the well-known compensation chamber or reservoir of a telescopic shock absorber. The chamber 42 is connected to the lower chamber 40 by the valve assembly 34 in the manner which will be explained further below.

Near the piston 22, the rod 24 has an axial duct 44 which opens into the upper chamber 38 through a lateral through-hole 46.

The upper end of the axial duct 44 leads to an enlarged cavity or seat 48 in which an electrical pressure transducer 50, whose function will be explained further below, is sealingly mounted. An upper part of the cavity 48 has a thread 52 with which a threaded ring 54 is engaged to retain the transducer 50 in its seat 48. An electrical wire for the external connection of the transducer 50 is indicated 56. The wire 56 extends from the top of the head 26 through a resilient dust-excluding plug 58.

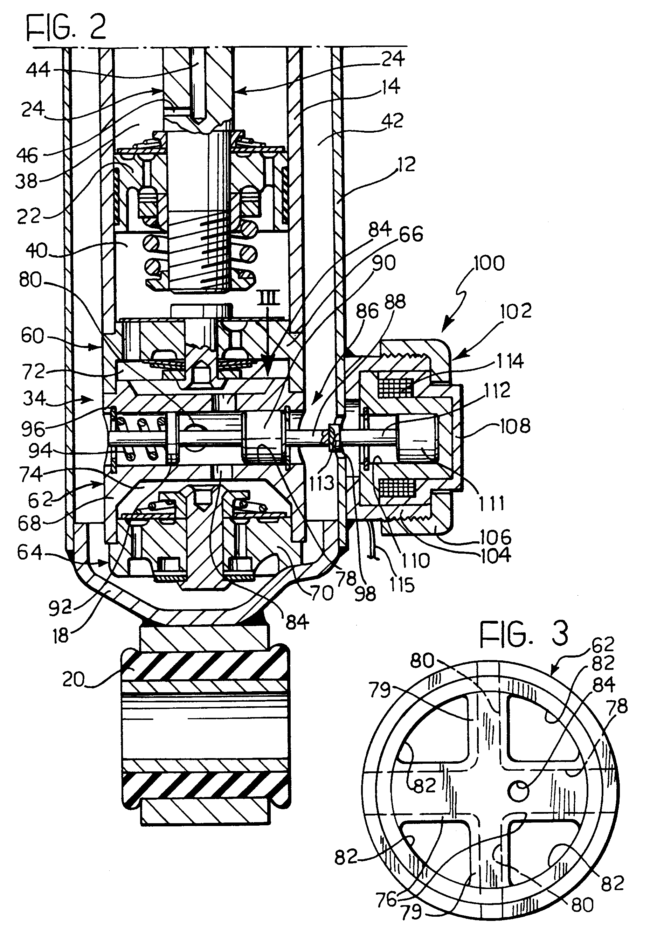

A detailed description of the valve assembly 34 will now be given with reference to the large-scale drawing of Figure 2. In Figure 2, parts already described with reference to Figure 1 are indicated by the same reference numerals.

In the preferred embodiment, the valve assembly 34 includes, from the top downwards, a first pressure valve unit 60 of known type, a switching servo valve 62, and a second pressure valve unit 64 of known type. The three units 60, 62 and 64 include respective valve bodies 66, 68 and 70 which are interlocked in a stack and clamped between the lower end of the cylinder 14 and the lower end piece 18.

Respective spaces 72 and 74 are defined between the two bodies 66 and 68 and between the two bodies 68 and 70.

The first pressure valve unit 66 puts the lower chamber 40 into communication with the underlying space 72 through valved ducts which restrict the flow of liquid from the lower chamber 40 to the compensation chamber 42 when the piston 22 moves downwardly as the shock absorber is compressed.

As will be explained further below, the switching solenoid valve 62 serves to put the spaces 72 and 74 into communication with the compensation chamber 42 directly or through the second valve unit 64.

The valve unit 64 has a known function, similar to that of the first valve unit 60, of achieving a second restriction of the flow of liquid to the compensation chamber 42 during the compression of the shock absorber.

The switching solenoid valve will now be described with reference to Figures 2 and 3.

As can be seen, in plan, the body 62 of the solenoid valve is shaped like a wheel with four spokes arranged in the form of a cross. Two of the spokes, indicated 76, define a diametral cylindrical cavity 78 which constitutes the cylinder of a cylindrical slide valve. The other two spokes, indicated 79, are tubular and define a duct 80 for direct communication between the interior of the cylinder 78 and the compensation chamber 42.

Quadrant-shaped holes 82 between the spokes 76 and 79 enable the spaces 72 and 74 above and below the body 62 to communicate with each other directly.

Large transverse holes 84 are formed in one of the spokes 76 and put the interior of the cylinder 78 into communication with both the spaces 72 and 74.

The cylindrical slide of the solenoid valve, generally indicated 86, includes a rod 88 which has an obturator collar 90 within the cavity 78. Also within the cavity 78, the rod 88 carries a plate 92 which reacts against a helical return spring 94. The spring 94 reacts in turn against a resilient shoulder ring 96 and biases the whole slide 86 (towards the right in Figure 2) to the position of Figure 2, in which the collar 90 does not close the holes 84 and communication between the holes and the lateral ducts 80 is unobstructed.

The rod 88 extends through the compensation chamber 42 and through a hole 98 in the outer tube 12. An electromagnet, generally indicated 100, is associated with the rod 88.

The electromagnet 100 includes a hermetically-sealed body 102 with an annular base part 104 which is welded to the outside of the tube 12 and an annular cover 106 which is fitted onto the base part 104. A body 108 defining a cylindrical cavity 110 is retained in the base part 104 by the cover 106. A core 111 is slidable in the cavity 110 and has a shank 112 with an end plate 113 which reacts against the corresponding end of the rod 88. A solenoid 114 associated with the core is set into the body 108. A wire for the external connection of the solenoid 114 is indicated 115.

The arrangement is such that the excitation of the solenoid 114 moves the core 111 and, by means of the shank 112 and the plate 113, the whole slide 86 against the opposing force of the spring 94 (towards the left in Figure 2).

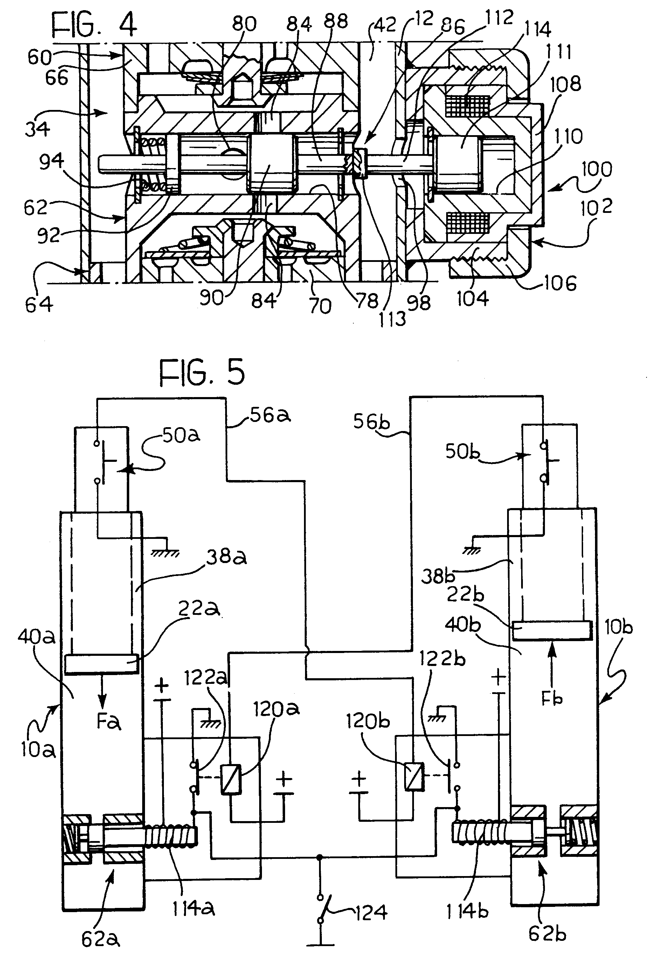

When the solenoid 114 is excited, the slide 86 assumes the position of Figure 4, in which the collar 90 closes the through-holes 84.

In the condition of Figure 2, termed the state in which the flow is less restricted, during compression of the shock absorber, the liquid passes through the upper valve unit 60 from the lower chamber 40 to the space 72 and the lower space 74 which is in permanent, unobstructed communication with the former through the holes 82. From these spaces 72 and 74, the liquid finds a substantially unobstructed, preferred route to the compensation chamber 42 through the holes 84, the cavity 78 of the slide valve, and the ducts 80. The damping of the shock absorber is thus achieved only by the pressure valve of the first valve unit 60.

When the slide valve 62 has been switched to the position of Figure 3, termed the state in which the flow is more restricted, however, the holes 84 are blocked by the collar 90 and, during compression of the shock absorber, the liquid can reach the compensation chamber 42 from the lower chamber only by passing through the first valve unit 60, the holes 82 and the second valve unit 64 so that the flow is more restricted and the shock absorber is correspondingly stiffer or harder.

Reference will now be made to Figure 5 to describe the electrical circuit interconnecting two similar shock absorbers of the type shown in the preceding drawings which, this time, are indicated 10a and 10b.

In Figure 5, the pistons of the shock absorbers are indicated 22a and 22b respectively. The switching solenoid valves are indicated 62a and 62b respectively. The solenoids are indicated 114a and 114b respectively. Their pressure transducers, which are in the form of pressure switches, are indicated 50a and 50b respectively.

The connections indicated by the earth symbol are connected to the earth of the vehicle. The opposite connections, indicated by the "+" sign, correspond to the positive pole of the vehicle's battery.

The upper chambers of the two shock absorbers 10a and 10b are indicated 38a and 38b respectively. Their lower chambers are indicated 40a and 40b respectively.

The pressure switches 50a and 50b are of the normally-open type. Each is connected by a respective conductor 56a and 56b to one end of the coil of a respective power relay 120b, 120a associated with the other shock absorber of the pair.

In a simpler embodiment, the conductor 56a of the pressure switch 50a could be connected directly to the solenoid 114b of the other shock absorber and the conductor 56b of the other pressure switch 50b could be connected directly to the solenoid 114a.

In the preferred embodiment, each relay 120a, 120b has a respective normally-open contact 122a, 122b in series with the respective solenoid 114a, 114b.

The operation of the two shock absorbers 10a, 10b will now be described with reference to a situation in which they are associated with right-hand and left-hand wheels on the same axle to counteract rolling.

It will be assumed that the shock absorber 10a is in compression and the shock absorber 10b is in extension, as indicated respectively by the arrows Fₐ and F_{b} which show the directions in which their pistons 22a and 22b are moving.

If the pressure in the upper chamber 38b exceeds a certain predetermined level as a result of an extension due, in the antiroll application, to an asymmetric jolt or a sideways skid resulting in turn from a deviation from straight-line travel, the pressure switch 50b closes, as shown, and supplies the coil of the relay 120a whose contact 122a closes so that the solenoid 114a is supplied. The solenoid valve 62a is thus switched to the more restricted state described above, resulting in the stiffening of the shock absorber 10a so as to counteract an increased roll.

When both the wheels with which the two shock absorbers 10a and 10b are associated are extended by a jolt of an intensity such that the pressures in both the upper chambers 38a, 38b exceed the predetermined threshold, both the solenoid valves 62a and 62b switch to the state in which the flow is more restricted in compression but, since both the shock absorbers 10a and 10b are in extension, they are not stiffened undesirably.

Figure 5 also shows a variant with additional, manual or automatic external control.

A switch 124 is electrically in parallel with both the contacts 122a and 122b and can thus supply both the solenoids 114a and 114b simultaneously.

The switch 124 may be a manually-operated switch which can be operated by the driver of the vehicle and the closure of which is intended to keep both the solenoids 114a, 114b supplied to keep both the shock absorbers 10a and 10b stiffened over very rough terrain.

In addition, or alternatively, the switch 124 may be a contact associated with the brake pedal (for example, the same switch as for the stop lights) so as to be closed as a result of the operation of the pedal, or it may be a deceleration sensor. In this case, the front shock absorbers are stiffened automatically when braking is started so as to limit the pitching of the vehicle.

## Claims

1. A suspension system for vehicles in which two similar, interdependent hydraulic shock absorbers (10; 10a, 10b) interconnect respective remote regions of the suspended part of the vehicle and respective non-suspended parts, in which each shock absorber (10; 10a, 10b) is of the type including a cylinder (14) divided internally into an upper chamber (38; 38a, 38b) and a lower chamber (40; 40a, 40b) by a valved piston (22; 22a, 22b) with a rod (24) which projects from an upper end of the shock absorber, and a compensation chamber (42) which communicates with the lower chamber (40) by means of a valve assembly (34) including a switching servo valve (62; 62a, 62b), and in which the two shock absorbers are interconnected by mutual enslavement means such that, when a predetermined pressure threshold is exceeded in one of the shock absorbers, the servo valve (62; 62a, 62b) of the other shock absorber switches from a state in which the flow of liquid between the lower chamber (40, 40a, 40b) and the compensation chamber (42) through the valve assembly (34) is less restricted to a state in which the flow is more restricted, characterised in that each switching servo valve is a solenoid valve (62; 62a, 62b) and the mutual enslavement means comprise, for each shock absorber (10; 10a, 10b), an electrical pressure transducer (50; 50a, 50b) associated with the upper chamber (38; 38a, 38b) for controlling the solenoid valve of the other shock absorber and for switching the solenoid valve of the other shock absorber from the state in which the flow is less restricted to the state in which the flow is more restricted when the pressure in the upper chamber (38; 38a, 38b) with which the transducer (50; 50a, 50b) is associated exceeds the threshold, the valve assembly (34) including a stack of three bodies, a first, upper one of which is the body (66) of a first pressure valve unit (60), a second, intermediate one of which is the body (68) of the solenoid valve (62) and the third, lower one of which is the body (68) of a second pressure valve unit (64), the body (68) of the solenoid valve (62) having holes (82) defining unobstructed communication between the two pressure valve units (60, 64), and connecting ducts (80, 84) being arranged so as to establish substantially unobstructed communication between the first pressure valve unit (60) and the compensation chamber (42), an obturator collar (90) being provided in a slide (86) of the solenoid valve (34) for closing the ducts (84).

2. A suspension system according to Claim 1, characterised in that each transducer (50; 50a, 50b) is a normally-open pressure switch whose closure causes the excitation of a winding (114; 114a, 114b) of the respective solenoid valve (62; 62a, 62b) so that it switches from the state in which the flow is less restricted to that in which the flow is more restricted.

3. A suspension system according, to Claim 2, characterised in that it includes, for each solenoid valve (62; 62a, 62b), a power relay (120a, 120b) with a pair of normally-open contacts (122a, 122b) for supplying the winding (114; 114a, 114b) of the solenoid valve and an excitation winding in series with the respective pressure switch (50; 50a, 50b).

4. A suspension system according to any one of the preceding claims, characterised in that the normally-open contacts (122a, 122b) of both the relays (120a, 120b) are in parallel with a common switch (124) which can be closed to stiffen both interdependent shock absorbers (10a, 10b) simultaneously.

5. A suspension system according to Claim 4, for application to a vehicle to counteract pitching, characterised in that the common switch (124) is a contact-maker which is sensitive to the braking or deceleration of the vehicle.

6. A suspension system according to any one of the preceding claims, characterised in that, in each shock absorber (10; 10a, 10b), the pressure transducer (50) is in the upper end (26) of the rod (24) of the piston (22) and the rod (24) has an axial duct (44) for transmitting pressure from the upper chamber (38) to the transducer (50).

7. A suspension system according to any one of the preceding claims, characterised in that the solenoid valve (62) is interposed between first and second pressure valve units (60, 64) and is adapted to effect a switch between two paths for the liquid extending hydraulically in parallel between the lower chamber (40) of the cylinder (14) and the compensation chamber (42), one of the paths being less restricted and extending through the first pressure valve unit (60) and a substantially unobstructed duct (80, 84) in the solenoid valve (62) in sequence, and the other being more restricted and extending through both pressure valve units (60, 64) in sequence.

8. A suspension system according to any one of Claims 1 to 6, in which the shock absorbers (10; 10a, 10b) are of the telescopic type with an annular compensation chamber (42) defined between the cylinder (14) and an outer tube (12), and with a valve assembly (34) at the bottom for communication between the lower chamber (40) of the cylinder (14) and the compensation chamber (42), characterised in that the valve assembly (34) includes a solenoid valve body (68) having a cylindrical diametral valve cavity (78) with ducts (80, 84) which connect the lower chamber (40) to the compensation chamber (42), a cylindrical slide (86) being slidable in the valve cavity (78) and having a rod (88) with an obturator collar (90) for controlling the communication ducts (84) and an end which is associated with the core (111) of an electromagnet slidable in an electromagnet body (102) fixed to the outside of the outer tube (12) and housing a solenoid (114) associated with the core (111).

## Patentansprüche

1. Fahrzeugaufhängesystem, bei dem zwei gleichartige, voneinander abhängige hydraulische Stoßdämpfer (10;10a,10b) jeweilige voneinander entfernte Bereiche des aufgehängten Teiles des Fahrzeuges und jeweilige nicht aufgehängte Teile verbinden, wobei jeder Stoßdämpfer (10;10a,10b) von dem Typ ist, der einen Zylinder (14), welcher innen in eine obere Kammer (38; 38a, 38b) und eine untere Kammer (40;40a,40b) durch einen ein Ventil aufweisenden Kolben (22;22a,22b), an dem eine aus einem oberen Ende des Stoßdämpfers herausragende Stange (24) angeordnet ist, unterteilt ist, und eine Kompensationskammer (42), welche mit der unteren Kammer (40) über eine ein Umschalt-Stellventil (62; 62a,62b) aufweisende Ventilanordnung (34) kommuniziert, und wobei die beiden Stoßdämpfer über wechselseitige Anbindungsmittel verbunden sind, sodaß, wenn ein vorgegebener Schwellenwert des Druckes in einem der Stoßdämpfer überschritten wird, das Stellventil (62;62a,62b) des anderen Stoßdämpfers von einem Zustand, in dem der Fluß der Flüssigkeit zwischen der unteren Kammer (40;40a,40b) und der Kompensationskammer (42) durch die Ventileinrichtung (34) weniger beschränkt ist, in einen Zustand, in dem der Fluß stärker beschränkt ist, umschaltet, dadurch gekennzeichnet, daß jedes Umschalt-Stellventil ein Magnetventil (62;62a,62b) ist und daß die wechselseitigen Anbindungsmittel für jeden Stoßdämpfer (10;10a,10b) einen elektrischen Druckaufnehmer (50;50a,50b) enthalten, der mit der oberen Kammer (38;38a,38b) verbunden ist, zur Steuerung des Magnetventils des anderen Stoßdämpfers und zum Umschalten des Magnetventils des anderen Stoßdämpfers von einem Zustand, bei dem der Fluß weniger beschränkt ist, in einen Zustand, bei dem der Fluß stärker beschränkt ist, falls der Druck in der oberen Kammer (38;38a,38b), mit der der Aufnehmer (50;50a, 50b) in Verbindung steht, einen Schwellenwert überschreitet, wobei die Ventileinrichtung (34) einen Stapel von drei Körpern aufweist, von denen ein erster oberer der Körper (66) einer ersten Druckventileinheit (60) ist, ein zweiter mittlerer der Körper (68) des Magnetventils (62) ist und der dritte untere der Körper (70) einer zweiten Druckventileinheit (64) ist, und von denen der Körper (68) des Magnetventils (62) Öffnungen (82) besitzt, die eine ungehinderte Kommunikation zwischen den beiden Druckventileinheiten (60, 64) herstellen, sowie Verbindungskanäle (80,84), welche angeordnet sind, um eine im wesentlichen ungehinderte Kommunikation zwischen der ersten Druckventileinheit (60) und der Kompensationskammer (42) herzustellen, wobei ein Dichtungsreifen (90) an einem Schieber (86) des Magnetventils (34) zum Verschließen der Kanäle (84) vorgesehen ist.

2. Aufhängungsystem nach Anspruch 1, dadurch gekennzeichnet, daß jeder Aufnehmer (50;50a,50b) ein im Ruhezustand offener Druckschalter ist, dessen Schließen die Erregung einer Wicklung (114;114a,114b) des jeweiligen Magnetventils (62;62a,62b) herbeiführt, sodaß es vom Zustand, in dem der Fluß weniger beschränkt ist, in den, in dem der Fluß stärker beschränkt ist, umschaltet.

3. Aufhängungsystem nach Anspruch 2, dadurch gekennzeichnet, daß es für jedes Magnetventil (62;62a,62b) ein Starkstromrelais (120a,120b) mit einem Paar von im Ruhezustand geöffneten Kontakten (122a,122b) zur Versorgung der Wicklung (114;114a,114b) des Magnetventils und eine Erregerwicklung in Serie mit dem jeweiligen Druckschalter (50,50a,50b) beinhaltet.

4. Aufhängungsystem nach einem der vorhergehenden Ansprüche, dadurch gekennzeichnet, daß die im Ruhezustand geöffneten Kontakte (122a,122b) der beiden Relais (120a,120b) parallel zu einem gemeinsamen Schalter (124) liegen, der geschlossen werden kann, um die beiden voneinander abhängigen Stoßdämpfer (10a,10b) gleichzeitig zu versteifen.

5. Aufhängungsystem nach Anspruch 4 zur Anwendung bei einem Fahrzeug, um Nickbewegungen entgegenzuwirken, dadurch gekennzeichnet, daß der gemeinsame Schalter (124) ein Kontaktstück ist, welches auf Bremsen oder Verzögerung des Fahrzeuges anspricht.

6. Aufhängungssystem nach einem der vorhergehenden Ansprüche, dadurch gekennzeichnet, daß sich in jedem Stoßdämpfer (10;10a,10b) der Druckaufnehmer (50) im oberen Ende (26) der Stange (24) des Kolbens (22) befindet und daß die Stange (24) einen axialen Kanal (44) zur Druckübertragung von der oberen Kammer (38) zum Aufnehmer (50) aufweist.

7. Aufhängungssystem nach einem der vorhergehenden Ansprüche, dadurch gekennzeichnet, daß das Magnetventil (62) zwischen ersten und zweiten Druckventileinheiten (60,64) eingeschaltet ist und geeignet ist, einen Schalter zwischen zwei Wegen für die Flüssigkeit darzustellen, welche sich hydraulisch parallel zwischen der unteren Kammer (40) des Zylinders (14) und der Kompensationskammer (42) erstrecken, wobei einer der Wege weniger beschränkt ist und sich durch die erste Druckventileinheit (60) und in der Folge durch eine im wesentlichen ungehinderte Leitung (80,84) im Magnetventil (62) erstreckt, und der andere stärker beschränkt ist und sich durch beide Druckventileinheiten (60,64) in Folge erstreckt.

8. Aufhängungssystem nach einem der Ansprüche 1 bis 6, wobei die Stoßdämpfer (10; 10a, 10b) vom Teleskop-Typ sind, mit einer ringförmigen Kompensationskammer (42), welche zwischen dem Zylinder (14) und einer äußeren Röhre (12) festgelegt ist, und mit einer Ventileinrichtung (34) am unteren Ende zur Kommunikation zwischen der unteren Kammer (40) des Zylinders (14) und der Kompensationskammer (42), dadurch gekennzeichnet, daß die Ventileinrichtung (34) einen Magnetventilkörper (68), der mit einem zylindrischen, diametralen Ventilraum (78), an dem Leitungen (80,84) angeordnet sind, welche die untere Kammer (40) mit der Kompensationskammer (42) verbinden, und mit einem zylindrischen Schieber (86) versehen ist, der verschiebbar im Ventilraum (78) angeordnet ist und der einen Stift (88) mit einem Dichtungsreifen (90) zum Steuern der Kommunikationsleitungen (84) und mit einem Ende, welches mit dem Kern (111) eines Elektromagneten in Verbindung steht, aufweist, wobei der Kern (111) des Elektromagneten verschiebbar in einem Elektromagneten-Körper (102) ist, welcher an der Außenseite der äußeren Röhre (12) angebracht ist und eine mit dem Kern (111) zusammenwirkende Zylinderspule (114) aufnimmt.

## Revendications

1. Système de suspension pour véhicules dans lequel deux amortisseurs hydrauliques de chocs (10 ; 10a, 10b) similaires et interdépendants relient entre elles deux zones respectives éloignées de la partie suspendue du véhicule et des parties respectives non suspendues, dans lequel chaque amortisseur de chocs (10 ; 10a, 10b) est du type comprenant un cylindre (14) divisé à l'intérieur en une chambre supérieure (38 ; 38a, 38b) et en une chambre inférieure (40 ; 40a, 40b) par un piston (22 ; 22a, 22b) muni d'une valve comportant une tige (24) qui fait saillie à partir de l'extrémité supérieure de l'amortisseur de chocs, et en une chambre de compensation (42) qui communique avec la chambre inférieure (40) au moyen d'un ensemble de valve (34) comportant une servo-valve de commutation (62 ; 62a, 62b), et dans lequel les deux amortisseurs de chocs sont interconnectés par des moyens d'asservissement mutuel de façon telle que lorsqu'un seuil de pression fixé à l'avance est dépassé dans l'un des amortisseurs de chocs, la servo-valve (62 ; 62a, 62b) de l'autre amortisseur de chocs passe d'un état dans lequel l'écoulement de liquide entre la chambre inférieure (40 ; 40a, 40b) et la chambre de compensation (42) qui s'effectue par l'intermédiaire de l'ensemble de valve (34) est moins restreint, à un état dans lequel l'écoulement est davantage restreint, caractérisé en ce que chaque servo-valve de commutation est une valve (62 ; 62a, 62b) à solénoîde et en ce que le moyen d'asservissement mutuel comprend, pour chaque amortisseur de chocs (10 ; 10a, 10b), un convertisseur pression-électricité (50 ; 50a, 50b) associé à la chambre supérieure (38 ; 38a, 38b) en vue de commander la valve à solénoîde de l'autre amortisseur de chocs et de faire passer la valve à solénoîde de l'autre amortisseur de chocs de l'état dans lequel l'écoulement est moins restreint à l'état dans lequel l'écoulement est davantage restreint lorsque la pression règnant dans la chambre supérieure (38 ; 38a, 38b) à laquelle le convertisseur (50 ; 50a, 50b) est associé excède le seuil, l'ensemble de valve (34) comprenant un empilement de trois corps, dont un premier, le corps supérieur, est le corps (66) d'une première unité (60) de valve de pression, dont un second, un corps intermédiaire, est le corps (68) de la valve (62) à solénoîde, et dont le troisième, le corps inférieur est le corps (70) d'une seconde unité de valve de pression (64), le corps (68) de la valve (62) à solénoîde comportant des trous (82) définissant une libre communication entre les deux unités de valve de pression (60, 64) et des conduits de liaison (80, 84) étant agencés de manière à établir une communication sensiblement libre entre la première unité de valve de pression (60) et la chambre de compensation (42), un collier obturateur (90) étant monté dans un tiroir (86) de la valve à solénoîde (34) en vue de fermer les conduits (84).

2. Système de suspension selon la revendication 1, caractérisé en ce que chaque convertisseur (50 ; 50a, 50b) est un interrupteur de pression normalement ouvert dont la fermeture provoque l'excitation d'un enroulement (114 ; 114a, 114b) de la valve à solénoîde respective (62 ; 62a, 62b) de façon telle qu'il passe de l'état dans lequel l'écoulement est moins restreint à l'état dans lequel l'écoulement est davantage restreint.

3. Système de suspension selon la revendication 2, caractérisé en ce qu'il comprend, pour chaque valve à solénoîde (62 ; 62a, 62b), un relais de puissance (120a, 120b) comportant une paire de contacts normalement ouverts (122a, 122b) en vue d'alimenter l'enroulement (114 ; 114a, 114b) de la valve à solénoîde, et un enroulement d'excitation monté en série avec l'interrupteur de pression (50 ; 50a, 50b) respectif.

4. Système de suspension selon l'une quelconque des revendications précédentes, caractérisé en ce que les contacts normalement ouverts (122a, 122b) des deux relais (120a, 120b) sont montés en parallèle avec un interrupteur commun (124) qui peut être fermé afin de durcir simultanément les deux amortisseurs de chocs interdépendants (10a, 10b).

5. Système de suspension selon la revendication 4 destiné à être appliqué à un véhicule en vue de s'opposer au tangage, caractérisé en ce que l'interrupteur commun (124) est un dispositif de contact qui est sensible au freinage ou à la décélération du véhicule.

6. Système de suspension selon l'une quelconque des revendications précédentes, caractérisé en ce que dans chaque amortisseur de chocs (10 ; 10a, 10b) le convertisseur de pression (50) se trouve dans l'extrémité supérieure (26) de la tige (24) du piston (22) et que la tige (24) comporte un conduit axial (44) destiné à transmettre la pression de la chambre supérieure (38) au convertisseur (50).

7. Système de suspension selon l'une quelconque des revendications précédentes, caractérisé en ce que la valve à solénoîde (62) est interposée entre les première et seconde unités de valves de pression (60, 64) et est apte à exécuter une commutation entre deux voies pour liquide, qui s'étendent hydrauliquement en parallèle entre la chambre inférieure (40) du cylindre (14) et la chambre de compensation (42) ; l'une des voies étant moins restreinte et passant successivement par la première unité de valve de pression (60) et par un conduit sensiblement libre (80, 84) dans la valve à solénoîde (62), et l'autre étant davantage restreint et passant successivement dans les deux unités de valves de pression (60, 64).

8. Système de suspension selon l'une quelconque des revendications 1 à 6, dans lequel les amortisseurs de chocs (10 ; 10a, 10b) sont du type télescopique, une chambre de compensation annulaire (42) étant définie entre le cylindre (14) et un tube extérieur (12), et comportant un ensemble de valve (34) placé au fond afin de faire communiquer la chambre inférieure (40) du cylindre (14) et la chambre de compensation (42), caractérisé en ce que l'ensemble de valve (34) comprend un corps (68) de valve à solénoîde comportant une cavité de valve cylindrique (78) diamétrale munie de conduits (80, 84) qui relient la chambre inférieure (40) à la chambre de compensation (42), un tiroir cylindrique (86) pouvant glisser dans la cavité (78) de valve, et comportant une tige (88) dotée d'un collier obturateur (90) destiné à commander les conduits de communication (84) et une extrémité qui est associée au plongeur (111) d'un électro-aimant susceptible d'être déplacé dans un corps (102) d'électro-aimant fixé à l'extérieur du tube extérieur (12) et logeant un solénoîde (114) associé au plongeur (111).
